Europäisches Patentamt

**European Patent Office**

**Office européen des brevets**

(19)

(11) Veröffentlichungsnummer: **0 065 247**
**A1**

(12) **EUROPÄISCHE PATENTANMELDUNG**

(21) Anmeldenummer: **82104023.5**

(22) Anmeldetag: **08.05.82**

(51) Int. Cl.³: **G 05 B 19/18**

(30) Priorität: **16.05.81 DE 3119629**

(43) Veröffentlichungstag der Anmeldung: **24.11.82**
**Patentblatt 82/47**

(84) Benannte Vertragsstaaten: **CH FR GB LI SE**

(71) Anmelder: **Firma Carl Zeiss, D-7920 Heidenheim (Brenz) (DE)**

(72) Erfinder: **Herzog, Klaus, Ing.-Grad.,**
**Kopernikusstrasse 42, D-7082 Oberkochen (DE)**

(54) **Verfahren zum Spannen und Positionieren von Präzisionsteilen.**

(57) Es wird ein Verfahren zum Spannen und Positionieren von feinwerktechnischen Präzisionsteilen (1) beschrieben, das ohne manuelles Ausrichten bzw. Anreissen der Teile vor der Fertigung arbeitet. Die Teile werden lediglich jeweils auf Paletten (2) fixiert. Anschliessend wird auf einer Mehrkoordinatenmessmaschine (4) die Position der Teile relativ zu der sie tragenden Palette bestimmt.

Die numerisch gesteuerte Bearbeitungsmaschine (3) besitzt eine Palettenaufnahme (5), die um drei Achsen drehbar bzw. schwenkbar ist. Die Verschwenkung der Palettenaufnahme erfolgt rechnergesteuert derart, dass die Verkantung des Werkstückes auf der Palette gerade kompensiert wird. Dazu ist das Steuerteil (7) der Bearbeitungsmaschine, das neben den translatorischen Maschinenachsen auch die Schwenkachsen der Palettenaufnahme steuert, mit dem Rechner (14) der Mehrkoordinatenmessmaschine verbunden.

Bei der Vermessung des Werkstücks nach der Bearbeitung werden durch einen Vergleich mit Solimassen Abweichungen erkannt, die nach einem vorgegebenen Programm Fehlfunktionen der Bearbeitungsmaschine zugeordnet werden. Durch ein weiteres Programm wird über die Behebung der Fehlfunktionen und die Nachbearbeitung der Teile entschieden.

ACTORUM AG

Verfahren zum Spannen und Positionieren von Präzisionsteilen

Die Erfindung betrifft ein Verfahren zum Spannen und Positionieren bei der Fertigung insbesondere von feinwerktechnischen Präzisionsteilen auf numerisch gesteuerten Bearbeitungsmaschinen, wobei das Werkstück vor der Bearbeitung auf einer Platte fixiert wird, die in einer Aufnahme der Bearbeitungsmaschine einsetzbar ist, sowie eine Fertigungszelle zur Durchführung des Verfahrens.

Zur Bearbeitung und zum Transport von prismatischen Werkstücken auf sogenannten flexiblen Bearbeitungszentren, d.h. Maschinen, die durch Werkzeugwechsel das sequentielle Ausführen mehrerer unterschiedlicher Bearbeitungsvorgänge erlauben, werden die Werkstücke üblicherweise auf Paletten aufgespannt, die in entsprechende Aufnahmen in der Maschine eingeführt werden. Damit die Bearbeitung automatisch ablaufen kann, muß das Werkstück eine genau vorgegebene Lage in Bezug auf das Koordinatensystem der Maschine einnehmen. Die Werkstücke werden daher auf der Palette nicht nur fixiert sondern hochgenau, d.h. innerhalb der für die Bearbeitung zulässigen Toleranzen manuell ausgerichtet (positioniert).

Bei feinwerktechnischen Teilen, die sehr komplexe Formen besitzen, ist oft ein mehrfaches Aufspannen und Wiederausrichten während der Bearbeitung erforderlich, was relativ zeitvorrichtungs- und personalaufwendig ist. Zudem weisen diese Teile geringe Wandstärken und daher wenig Eigenstabilität auf. Das führt dazu, daß sich diese Teile schon während des Aufspannens und Ausrichtens sowie während der anschließenden Bearbeitung verformen können, wodurch dann die Fertigungsgenauigkeit limitiert ist.

Aus der DE.OS 27 05 200 ist es bekannt, Werkstücke unausgerichtet auf dem dreh-kipp- und schwenkbaren Tisch einer Bearbeitungsmaschine aufzuspannen, ihre Lage mit Hilfe von Meßfühlern zu bestimmen und anschließend durch drehen bzw. kippen oder schwenken des Tisches zu korrigieren.

Bei diesem Verfahren kann die Bearbeitungsmaschine während des Spannens und Messens nicht eingesetzt werden. Außerdem erfordert es die Bereitstellung einer Spezialmaschine, die normalerweise bei Bearbeitungsmaschinen nicht vorhandene, bewegliche Meßfühler besitzt.

1 P 912 EP

Es ist die Aufgabe der vorliegenden Erfindung, den Vorgang des Aufspannens von Werkstücken auf Paletten vor und während eines automatisch ablaufenden Fertigungsprozesses zu vereinfachen und dabei insbesondere den Zeit- und Personalaufwand zu verringern, sowie die Fertigungsgenauigkeit zu steigern, ohne daß sich die Standzeit der Maschinen verringert.

Diese Aufgabe wird durch die Maßnahmen gemäß dem kennzeichnenden Teil des Anspruchs 1 gelöst.

Beim erfindungsgemäßen Verfahren ist also kein manuell auszuführendes hochgenaues Positionieren des Werkstücks auf der Palette erforderlich. Das Werkstück wird lediglich fixiert, z.B. aufgeklebt. Das Ausrichten des Werkstücks in Bezug auf das Koordinatensystem des Bearbeitungszentrums erfolgt vielmehr durch Verschwenken der gesamten Palette entsprechend den von der Meßmaschine ermittelten Schieflage des Werkstücks auf der Palette.

Da die Ermittlung der Schieflage unabhängig vom Bearbeitungszentrum auf einer Mehrkoordinatenmeßmaschine erfolgt, die außerdem mehrere gleichzeitig laufende Bearbeitungsmaschinen versorgen kann, ist eine optimale Nutzung des Maschinenparks gewährleistet. Außerdem kann nach dem Verfahren sehr genau gearbeitet werden, da in die Meßwerte im Gegensatz zu dem in der OS 27 05 200 beschriebenen Verfahren die im Vergleich zu Meßmaschinen geringere Genauigkeit der Führungen der Bearbeitungsmaschine nicht eingeht.

Eine Mehrkoordinatenmeßmaschine wird heute ohnehin häufig in Verbindung mit Bearbeitungszentren, nämlich zur Endkontrolle der Werkstücke eingesetzt, so daß sich der Aufwand zur Durchführung des Verfahrens im wesentlichen auf die Bereitstellung eines an sich bekannten kipp-, dreh- und schwenkbaren Palettenaufnahmesystems am Bearbeitungszentrum sowie die softwaremäßige Kopplung von Meß- und Bearbeitungsmaschine reduziert. Diesem einmaligen Aufwand steht die vorstehend erläuterte Zeit- und Personaleinsparung gegenüber.

Vorteilhaft ist es, wenn auch die Meßmaschine mit einer Palettenaufnahme ausgerüstet ist. Da deren Position zum Koordinatensystem der Meßmaschine festgelegt ist, genügt es dann das Werkstück zur Bestimmung seiner Lage anzutasten und das Antasten der Palette entfällt. Außerdem erlaubt es den automatischen Transfer zwischen Meßmaschine und Bearbeitungsmaschine.

Zweckmäßig wird auf der Meßmaschine nicht nur die Position des zu bearbeitenden Rohteils durch Antasten einer minimal erforderlichen Anzahl von Punkten ermittelt, sondern die gesamte Geometrie des Teils durch Antasten einer Vielzahl von Meßpunkten insbesondere in den bei der Bearbeitung kritischen Bereichen vermessen. Anschließend kann per Rechenprogramm ein Vergleich zwischen der Ist-Geometrie des Rohteils und der Soll-Geometrie des Fertigteils stattfinden, der auf eine optimale Einpassung des Fertigteils in das Rohteil nach vorgegebenen Kriterien, z.B. einer gleichmäßigen Spanabnahme bei der Fertigung hinausläuft. Da die dabei gewonnenen Korrekturwerte auf die Lage der Palette im Bearbeitungszentrum rückgekoppelt werden, dessen Werkzeug also ein am Fertigteil optimal orientiertes Rohteil vorfindet, entfällt die bisher nötige zeitaufwendige manuelle Anreißarbeit.

Weiterhin ist es vorteilhaft, daß Werkstück samt Palette zwischen einzelnen Bearbeitungsschritten auf die Meßmaschine aufzulegen und Zwischenprüfungen vorzunehmen. Die Meßmaschine ermittelt bei Zwischenprüfungen Abweichungen von der Soll-Geometrie. Aus den Ergebnissen der Maß-, Form- und Lagemessungen werden mittels eines Analyseprogramms die Abweichungsursachen wie Positionierfehler der Maschine, Programmfehler, Werkzeugeinstellfehler, Werkzeugfehler unter Einbeziehung der gewählten technologischen Größen wie Vorschub, Schnittgeschwindigkeit und Werkzeugwechsel sowie Unzulänglichkeiten durch Verschmutzung im Bereich der Palettenpositionierung ermittelt. Anschließend wird ein weiteres Programm eingeleitet, das die Entscheidung auf Abhilfemaßnahmen fällt, und durch Rückkopplung auf die Einstellparameter den Regelkreis zwischen Bearbeitungszentrum und Mehrkoordinatenmeßmaschine schließt.

Beispielsweise ermittelt die Meßmaschine zwischen den Zerspannungsvorgängen die Verzugswerte, die durch eine ungleichmäßige Spanabnahme infolge des Aufmaßes hervorgerufen werden. Minimale Verformungen durch freiwerdende Eigenspannungen und durch die Bearbeitungskräfte erhält man bei kleinstmöglicher und gleichmäßiger Spanabnahme. Die Größe der Spanabnahme aber ist nach unten durch die Positioniergenauigkeit des Werkstücks auf der Palette begrenzt. Durch mehrfaches Messen und anschließendes Korrigieren der Werkstücklage wird somit eine wesentliche Erhöhung der erreichbaren Fertigungsgenauigkeit erzielt, bzw. das Erzeugen von Ausschuß verhindert.

Die Endkontrolle der Werkstücke, für eine repräsentative Anzahl von Exemplaren ausgeführt, erlaubt es, Trends in den Abweichungen der Fertigteilmaße von Sollmaßen zu erkennen, die auf systematische Fehler mit Langzeiteffekt schließen lassen (Werkzeug-Verschleiß, Temperaturgang der Maschine). Diee Fehlererkennung erfolgt automatisch im Rahmen eines vorgegebenen Programms, das auch die Beseitigung der Fehlerursachen für nachfolgende Werkstücke mit einschließt, indem über ein eindeutiges Entscheidungsnetzwerk eine Rückkopplung auf maschinenspezifische Parameter erfolgt. Die Fehler werden also beseitigt, bevor zulässige Toleranzen überschritten werden; damit wird die Produktion von Ausschuß vermieden.

Im folgenden wird die Erfindung anhand des anschließenden Flußdiagramms und der Fig. 1 - 2b der beigefügten Zeichnungen näher erläutert:

Fig. 1    skizziert eine mögliche Anordnung der Komponenten einer Fertigungszelle zur Durchführung des erfindungsgemäßen Verfahrens;

Die Fig. 2a und b stellen jeweils Schnittzeichnungen von Werkstücken dar, die gegenüber dem Koordinatensystem der Bearbeitungsmaschine nicht ausgerichtet (a) bzw. ausgerichtet (b) sind.

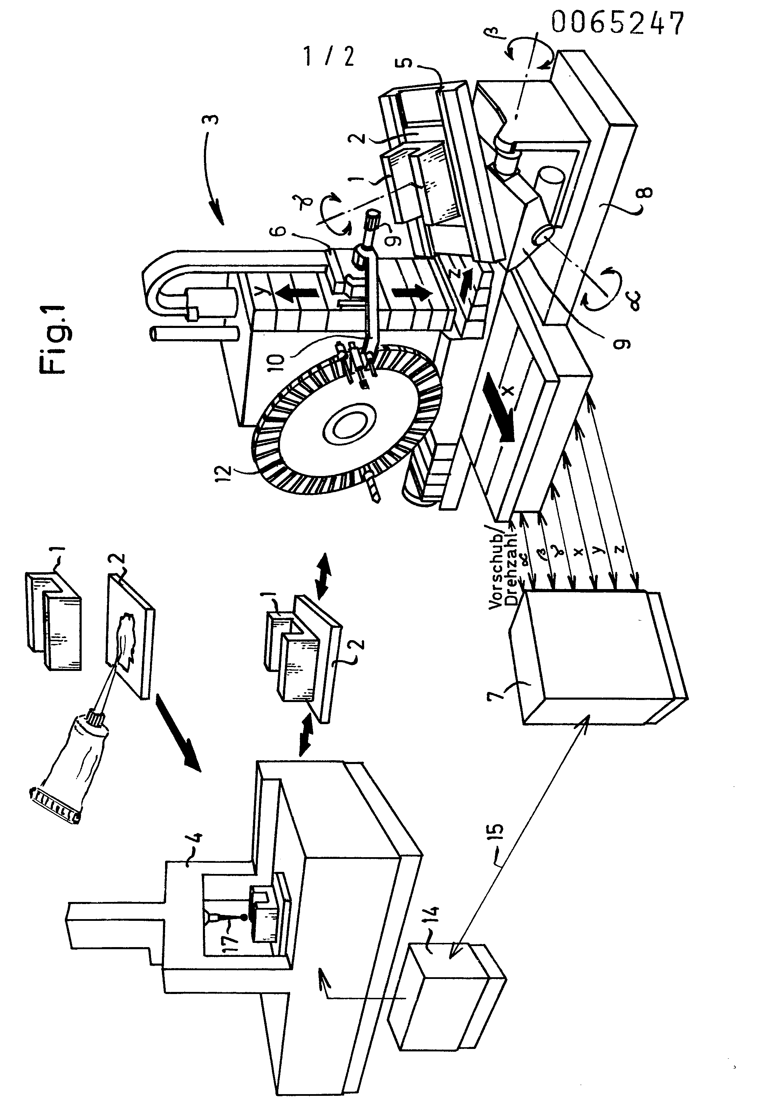

Die in Fig. 1 dargestellte Fertigungszelle besteht aus einer Mehrkoordinatenmeßmaschine 4, einem Steuerrechner 14 für die Meßmaschine 4, einer Bearbeitungsmaschine 3 und einer Kontrolleinheit 7 für die Bearbeitungsmaschine 3. Der Steuerrechner 14 und die Kontrolleinheit 7 sind zwecks Austausches von Lagedaten über eine Datenleitung 15 miteinander verbunden.

Auf dem Bett 8 der Bearbeitungsmaschine 3 ist eine Palettenaufnahme 5 um drei orthogonale Achsen $\alpha$, $\beta$, $\gamma$ drehbar bzw. schwenkbar montiert. Die Steuerung der Antriebe der Schwenkachsen erfolgt ebenso wie die Steuerung der Antriebe der translatorischen Maschinenachsen x,y,z durch die Kontrolleinheit 7. Diese steuert außerdem die technologischen Größen bei der Bearbeitung wie z.B. die Wahl des geeigneten Werkzeuges 9, das über die Wechseleinrichtung 10 dem Magazin 12 entnommen wird, den Vorschub sowie die Drehzahl des Werkzeugs.

Der Bearbeitungsvorgang, im Laufe dessen aus dem Rohteil 1 das Fertigteil entsteht, läuft wie im folgenden Flußdiagramm auf Seite 8 skizziert ist ab. Danach wird das Rohteil zuerst auf eine geeignete Weise auf der Palette 2 möglichst verzugsfrei fixiert, beispielsweise aufgeklebt oder auch angeschraubt. Danach wird die Palette 2 auf den Tisch der Mehrkoordinatenmeßmaschine 4 aufgelegt. Nach einem geeigneten Suchprogramm fährt der Taster 17 der Meßmaschine 4 den Meßbereich ab, bis das Werkstück 1 erstmalig angetastet wird.

Danach erfolgt die Lagebestimmung des Rohteils 1 relativ zur Palette 2, indem eine die Lage eindeutig bestimmende Anzahl von Meßpunkten des Werkstücks 1 und der Palette 2 angefahren werden. Die Auswahl der Meßpunkte des Werkstücks kann so vorgenommen werden, daß besonders an bearbeitungskritischen Stellen eine Meßpunktverdichtung stattfindet.

Falls auch die Meßmaschine 4 eine Palettenaufnahme besitzt die fest auf dem Tisch der Meßmaschine montiert ist, kann das Antasten der Palette 2 entfallen.

Anschließend werden im Rechner 14 die Sollmaße des Fertigteils mit den Istmaßen des Rohteils 1 verglichen. Das Fertigteil wird dabei nach vorwählbaren Kriterien, z.B. möglichst gleichmäßiges Übermaß, mathematisch in das Rohteil 1 hineingelegt. Stellt sich dabei heraus, daß das Rohteil 1 innerhalb der Toleranzen nicht bearbeitbar ist (weil es z.B. Untermaße aufweist), erfolgt entweder eine Anzeige, daß es sich um Ausschuß handelt, oder das Werkstück 1 wird samt Palette 2 über nicht dargestellte Transferiereinheiten selbsttätig entfernt.

0065247

```
                    ( Rohteil )
                         │
            ┌────────────────────────┐
            │   Fixieren auf Palette  │
            └────────────────────────┘
                         │
            ┌────────────────────────┐
            │   Befestigen der Palette │
            │        auf MKM          │
            └────────────────────────┘
                         │
            ┌────────────────────────┐
            │  "Suchen" des Rohteils  │
            │        auf MKM          │
            └────────────────────────┘
                         │
            ┌────────────────────────┐
            │  Lagebestimmung des     │
            │   Rohteils relativ      │
            │     zur Palette         │
            └────────────────────────┘
                         │
                        (○)
                         │
            ┌────────────────────────┐
            │  Messen und Einpassen   │
            │  der Sollgeometrie in   │
            │      das Rohteil        │
            └────────────────────────┘
                         │
                      < fertig >──── ja ────→ ( Fertigteil )
                         │ nein
                      < bearbeitbar >── nein ──→ ( Ausschuß )
                         │ ja
```

Berechnung der Einstelldaten des BAZ

Aufsetzen der Palette
auf BAZ

Fehlertrenderkennung,
Ermittlung der Fehlerquellen

Durchführung von Lagekorrekturen,
Wahl der technologischen Größen
am BAZ

Bearbeitung

Zwischenprüfung auf MKM

Andernfalls schließt sich an den rechnerischen Einpaßvorgang die Berechnung der Einstelldaten für die Drehwinkel $\alpha, \beta, \gamma$ der Palettenaufnahme 5 in Bezug auf das Koordinatensystem der Bearbeitungsmaschine 3 an.

Bereits während der Rechner 14 diese Daten berechnet, wird die Palette 2 mit dem Rohteil 1 auf die Palettenaufnahme 5 der Bearbeitungsmaschine 3 aufgesetzt. Die Steuereinheit 7 positioniert die Palettenaufnahme entsprechend den vom Rechner 14 übermittelten Daten, sodaß das Werkstück die für die Bearbeitung nötige Ausrichtung erfährt. Zusätzlich werden auch translatorische Abweichungen von der Sollposition des Werkstücks 1 berücksichtigt, die entweder bereits beim Fixieren auf der Palette oder durch die notwendigen rotatorischen Korrekturen entstanden sind. Die translatorische Korrektur erfolgt einfach durch Nullpunktsversatz des Bearbeitungskopfes 6 der Maschine 3.

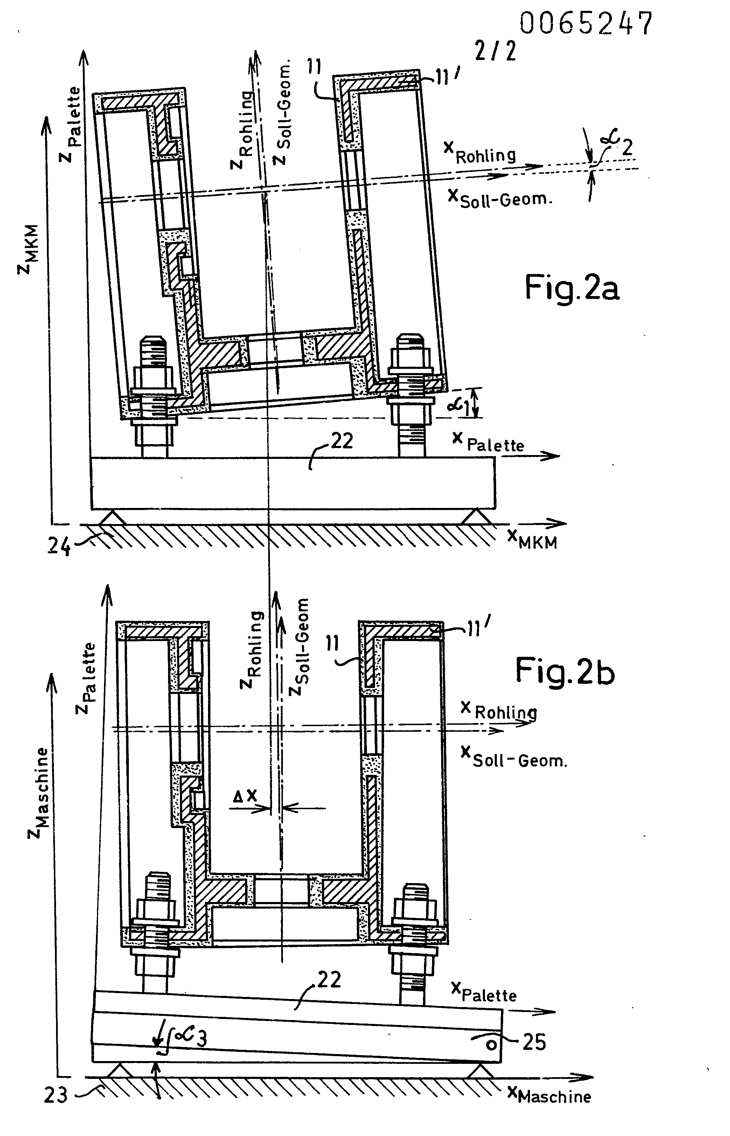

Anhand der vereinfachten Darstellung in Fig. 2 wird der Ausrichtprozeß nochmals erläutert:
Das prismatische Rohteil 11 ist mittels Schrauben auf der Palette 22 lediglich fixiert und gegenüber der zum Koordinatensystem der Meßmaschine parallelen Palette 22 in übertriebener Darstellung um den Winkel $\alpha_1$ verkantet (X-Rohling $\neq$ X-Palette). Das rechnerisch bestmöglich in das Rohteil 11 hineingelegte Fertigteil 11' weist außerdem eine Verkantung $\alpha_2$ gegenüber dem Rohteil auf. Der von der Meßmaschine ermittelte Wert für den Winkel $\alpha_3 = \alpha_1 - \alpha_2$ wird der Kontrolleinheit der Bearbeitungsmaschine gemeldet, die die Palettenaufnahme 25 um diesen Winkel $\alpha_3$ kippt. Danach ist das Werkstück 11 so positioniert, daß es die richtige Lage zur Maschinenachse für die Bearbeitung einnimmt.

Patentansprüche:

1. Verfahren zum Spannen und Positionieren bei der Fertigung insbesondere von feinwerktechnischen Präzisionsteilen auf numerisch gesteuerten Verarbeitungsmaschinen (3), wobei das Werkstück (1) vor der Bearbeitung auf einer Palette (2) fixiert wird, die in einer Aufnahme (5) der Bearbeitungsmaschine (3) einsetzbar ist, dadurch gekennzeichnet, daß

a) die das zu bearbeitende Werkstück (Rohteil 1), tragende Palette (2) einer Mehrkoordinatenmeßmaschine (4) zugeführt wird,

b) mit Hilfe der Meßmaschine (4) die Position des Werkstücks (1) relativ zur Palette (2) bestimmt wird,

c) die Palette (2) mit dem Werkstück (1) anschließend in die Palettenaufnahme (5) der Bearbeitungsmaschine (3) eingesetzt wird und

d) die Abweichung der Ist-Position des Werkstücks (1) von der Soll-Position relativ zum Koordinatensystem der Bearbeitungsmaschine (3) kompensiert wird, indem

e) die Palette (2) unter Verwendung der von der Meßmaschine (4) ermittelten Positionsdaten $(x,y,z; \alpha, \beta, \gamma)$ relativ zum Bearbeitungskopf (6) der Maschine (3) bewegt wird.

2. Verfahren nach Anspruch 1, dadurch gekennzeichnet, daß auf der Meßmaschine (4) zusätzlich die Rohteilgeometrie des Werkstücks (1,11) gemessen wird und mit der vorgegebenen Soll-Geometrie des bearbeiteten Werkstücks (1,11') im Sinne einer gleichmäßigen Spanabnahme verglichen wird und die Kompensation der Abweichung der Ist-Position von der Soll-Position auf der Bearbeitungsmaschine (3) auf die Soll-Geometrie bezogen erfolgt.

3. Verfahren nach Anspruch 1 bis 2, dadurch gekennzeichnet, daß die Bearbeitung des Werkstücks (1,11) in mehreren Schritten erfolgt, zwischen denen die Palette (2) zur Messung der Bearbeitungsergebnisse auf die Meßmaschine (4) aufgelegt und vermessen wird.

0065247

4. Verfahren nach Anspruch 1 bis 3, dadurch gekennzeichnet, daß die bearbeiteten Werkstücke (1,11') jeweils auf der Meßmaschine (4) endvermessen werden, die Meßwerte mit vorgegebenen Soll-Daten verglichen werden, und das Abweichungen von den Soll-Werten durch ein festgelegtes Programm bearbeitungsspezifischen Parametern eindeutig zugeordnet werden, die für nachfolgend zu bearbeitende, gleichartige Werkstücke abgeändert werden, sobald zulässige Toleranzen überschritten werden.

5. Fertigungszelle zur Durchführung des Verfahrens nach einem der Ansprüche 1 bis 4, bestehend aus einer Mehrkoordinatenmeßmaschine (4) und einer vorzugsweise flexiblen Bearbeitungsmaschine (3) mit einer drehbaren Palettenaufnahme (5) für die zu bearbeitenden Werkstücke (1,11), dadurch gekennzeichnet, daß die Palettenaufnahme (5) bzw. der Bearbeitungskopf (6) der Maschine (3) relativ zueinander um drei orthogonale Achsen verschwenkbar sind.

6. Fertigungszelle nach Anspruch 5, dadurch gekennzeichnet, daß die Steuereinheit (7) der Bearbeitungsmaschine mit dem Rechner (14) der Meßmaschine verbunden ist.

7. Fertigungszelle nach Anspruch 5-6, dadurch gekennzeichnet, daß die Mehrkoordinatenmeßmaschine eine Palettenaufnahme besitzt.

Fig.1

0065247

Vorschub/ Drehzahl

Fig. 2a

Fig. 2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 633 011  (S.BEDERMAN) *Zusammenfassung; Spalte 1, Zeile 29 bis Spalte 2, Zeile 31; Figur 1* | 1,5-7 | G 05 B  19/18 |
| Y | US-A-4 208 675  (J.BAJON et al. A.N.V.A.R.) *Spalte 1, Zeile 25 bis Spalte 6, Zeile 3; Figur 1* | 1,5 | |
| Y | US-A-3 605 909  (J.H.LEMELSON) *Spalte 1, Zeilen 18 bis 40; Spalte 1, Zeile 55 bis Spalte 2, Zeile 61; Spalte 3, Zeile 20 bis Spalte 9, Zeile 50; Figuren 1,2* | 1-2,5 | |
| A | DE-A-2 610 550; (TACK A.) *Erster Patentanspruch* | 3 | |
| A | DE-A-2 532 290  (A.HERBERT LTD.) *Erster Patentanspruch* | 4 | |

RECHERCHIERTE SACHGEBIETE (Int. Cl. ³)

G 05 B
B 23 Q

Der vorliegende Recherchenbericht wurde für alle Patentansprüche erstellt.

| Recherchenort DEN HAAG | Abschlußdatum der Recherche 26-08-1982 | Prüfer CORNILLIE O.A.R. |
|---|---|---|